# EUROPÄISCHE PATENTSCHRIFT

(11) **EP 1 613 498 B1**
(45) Veröffentlichungstag und Bekanntmachung des Hinweises auf die Patenterteilung: **23.07.2008**
(21) Anmeldenummer: 04722824.2
(22) Anmeldetag: 24.03.2004
(51) Int. Cl.: B60K 15/077

(54) **KRAFTSTOFFTANK MIT EINER VORRICHTUNG ZUM MESSEN DES FÜLLSTANDES**
FUEL TANK INCLUDING A DEVICE FOR MEASURING THE LEVEL OF FUEL
RESERVOIR DE CARBURANT MUNI D'UN DISPOSITIF SERVANT A MESURER LE NIVEAU DE CARBURANT

(30) Priorität: 17.04.2003 DE 10317672
(43) Veröffentlichungstag der Anmeldung: 11.01.2006
(73) Patentinhaber: Bayerische Motoren Werke Aktiengesellschaft, 80809 München (DE)
(72) Erfinder: STRASSER, Ralf, 82140 Olching (DE)
(86) Internationale Anmeldenummer: PCT/EP2004/003107
(87) Internationale Veröffentlichungsnummer: WO 2004/091960

(56) Entgegenhaltungen:
- EP-A- 0 106 012
- EP-A- 1 020 714
- DE-A- 10 063 201

## Beschreibung

Die Erfindung betrifft einen Kraftstofftank mit einem in eine erste Öffnung eingebauten Einfüllstutzen und einer in eine zweite Öffnung eingebauten Pumpeneinheit sowie einer Vorrichtung zum Messen des Füllstandes.

Die bekannten Vorrichtungen zum Messen des Füllstandes eines Kraftstofftanks, insbesondere für Kraftfahrzeuge, arbeiten mit einem Schwimmer, der am freien Ende eines schwenkbar gelagerten Hebels oder in einem Tauchrohr angeordnet ist. Die Höhenlage des Schwimmers kann beispielsweise mit elektrischen Kontakten ermittelt werden, die in der Bewegungsbahn des Schwimmers bzw. des Hebels angeordnet sind. Durch den Schwimmer wird ein elektrischer Stromkreis geschlossen, dessen Länge sich mit der Höhenlage des Schwimmers ändert. Durch den Widerstand des Stromkreises ist somit die Höhenlage des Schwimmers und damit der Füllstand des Kraftstofftanks definiert. Diese bekannten Gebersysteme sind als Einzelbaugruppen durch Flansche oder an Kraftstoffpumpen im Tank befestigt. Wegen der Größe des Hebeltankgebers und der Bahn, die der Schwimmer beschreibt, ist eine ideale Anordnung des Hebeltankgebers im Tank und seine Befestigung aus Platzgründen schwer zu realisieren. Ferner wird das Einführen des Hebeltankgebers in den Tank wegen der Kompaktheit des Gebers umständlich. Da der Hebeltankgeber an der Pumpeneinheit befestigt ist, muß hinsichtlich der Positionierung ein Kompromiß eingegangen werden. Der Tauchrohrgeber ist mit dem Nachteil behaftet, dass sein Flansch aus Platzgründen häufig nicht im oberen Bereich des Tanks angeordnet werden kann. Der Füllstand des Tanks über dem Flansch des Tauchrohrgebers kann daher nicht erfaßt werden. Dem Hebeltankgeber und dem Tauchrohrgeber ist der Nachteil gemein, dass ihre Wirkungsweise auf der Bewegung eines Schwimmers beruht und dass im Tank eine besondere Einbauöffnung vorgesehen sein muß.

Aus der DE 100 63 201 A1 (beinhaltet die Merkmale des Oberbegriffs des Anspruchs 1) ist ein Kraftstofftank mit einem Sensorsystem zum Messen des Füllstandes bekannt, das auf den hydrostatischen Druck des Kraftstoffs anspricht. Das Sensorsystem umfaßt einen mit einem elektronischen Anzeigegerät verbundenen und an einem Sensorgehäuse fixierten Sensor und eine berührungslos zum Sensor angeordnete, unter einem hydrostatischen Druck auslenkbare Membran. Eine durch eine Auslenkung der Membran bewirkte Abstandsänderung wird von dem Sensor in ein Ausgangssignal umgewandelt. Das Sensorgehäuse ist über ein Verbindungsgehäuse an einem Montageflansch befestigt, der in eine Öffnung des Kraftstofftanks eingesetzt ist. Zur Aufnahme eines Einfüllstutzens und einer Pumpeneinheit sind zusätzliche Öffnungen des Kraftstofftanks erforderlich.

Der Erfindung liegt die Aufgabe zugrunde, einen gattungsgemäßen Kraftstofftank zu schaffen, wobei die Meßvorrichtung keine beweglichen Teile aufweist, von der Raumform des Kraftstofftanks weitestgehend unabhängig ist und keine zusätzliche Einbauöffnung erforderlich macht.

Ein diesen Anforderungen entsprechender Kraftstofftank ist erfindungsgemäß dadurch gekennzeichnet, dass ein Foliengeber mit einem elektrischen Anschlußkabel versehen ist, das durch die Pumpeneinheit hindurch mit einem Anzeigegerät verbunden ist, dass der Foliengeber in ein Schutzrohr eingebettet ist, das mit Eintrittsöffnungen für den Kraftstoff versehen ist, und dass das Schutzrohr seitlich an dem Einfüllstutzen angebracht ist und gemeinsam mit diesem in die zugeordnete Öffnung des Kraftstofftanks eingesetzt ist.

Der im Rahmen der Erfindung benutzte Foliengeber ist an sich bekannt (EP 1 020 714 A2). Dabei handelt es sich um eine Folie, auf deren Rückseite eine elektrische Heizeinrichtung angeordnet ist und auf deren Vorderseite eine Vielzahl von Thermoelementen angeordnet ist, die Bestandteil eines elektrischen Stromkreises sind. Wenn die Thermoelemente von der elektrischen Heizeinrichtung erwärmt werden, dann erzeugen sie eine Spannung. Da die Wärmeleitfähigkeit einer Flüssigkeit wesentlich höher ist als diejenige von Luft, werden sich die in die Flüssigkeit eintauchenden Thermoelemente geringer erwärmen als die von Luft umgebenen Thermoelemente. Bei einer bestimmten Heizleistung der elektrischen Heizeinrichtung kann daher aus der von der Gesamtheit der Thermoelemente erzeugten Spannung auf den Füllstand der Flüssigkeit geschlossen werden.

Bei dem erfindungsgemäßen Kraftstofftank dient das Schutzrohr nicht nur zum Schutz des Foliengebers vor einer mechanischen Beschädigung, sondern es verleiht der Meßvorrichtung auch eine hinreichende Steifigkeit, so dass das untere Ende des Foliengebers am tiefsten Punkt des Kraftstofftanks angeordnet werden kann. Das Schutzrohr wird gemeinsam mit dem Einfüllstutzen in die zugeordnete Öffnung des Kraftstofftanks eingesetzt, und das Anschlußkabel ist durch die Pumpeneinheit hindurch aus dem Kraftstofftank herausgeführt. Die Meßvorrichtung macht daher keine zusätzlichen Öffnungen erforderlich. Dadurch, dass das Schutzrohr seitlich an dem Einfüllstutzen angebracht ist, besteht keine Gefahr, dass es beim Tankvorgang mit der Zapfpistole kollidiert.

Bei einer zweckmäßigen Weiterbildung der Erfindung ist vorgesehen, dass das Anschlußkabel über eine Steckverbindung mit einer oder mehreren in die Pumpeneinheit eingebetteten elektrische Leitungen verbunden ist. Nach dem gemeinsamen Einbau des Einfüllstutzens und des Schutzrohres mit dem Foliengeber in den Tank kann das Anschlußkabel durch die für die Kraftstoffpumpe vorgesehene Öffnung seitlich aus dem Tank herausgeführt und mit der Pumpeneinheit verbunden werden, die daraufhin in die Tanköffnung eingesetzt wird.

Bei einem stark zerklüfteten Kraftstofftank, wie er insbesondere bei Motorrädern üblich ist, kann der gemeinsame Einbau des Einfüllstutzens und des Schutzrohres Schwierigkeiten bereiten. In diesem Fall ist vorgesehen, dass das obere Ende des Schutzrohres mit dem Einfüllstutzen gelenkig verbunden ist. Dies kann beispielsweise in der Weise verwirklicht werden, dass das obere Ende des Schutzrohres mit einem Haken versehen ist, der in einen seitlich am Einfüllstutzen angebrachten Bügel eingehängt ist.

Wenn die Lage des unteren Endes des Schutzrohres durch die Raumform des Kraftstofftanks nicht definiert ist, kann es zweckmäßig sein, dass das untere Ende des Schutzrohres mit Befestigungsmitteln zur Befestigung desselben am Boden des Kraftstofftanks versehen ist. Zu diesem Zweck kann am unteren Ende des Schutzrohres eine Federklemme angebracht sein, die mit einem am Boden des Kraftstofftanks angeordneten Eingriffsbereich kraftschlüssig in Eingriff bringbar ist.

Das Schutzrohr besteht vorzugsweise aus zwei Halbschalen, die unter Bildung eines Schlitzes miteinander verrastet sind. Durch den Schlitz kann Kraftstoff in das Innere des Schutzrohres eindringen, so dass der Foliengeber bis zur Füllhöhe des Tanks vom Kraftstoff umspült ist.

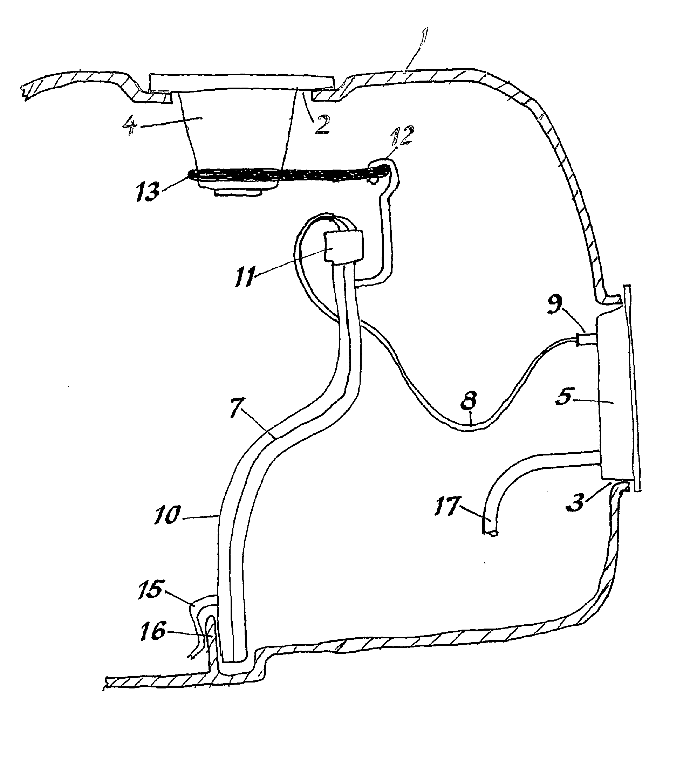

Ein bevorzugtes Ausführungsbeispiel der Erfindung ist in der Zeichnung dargestellt und wird nachfolgend näher erläutert.

In der einzigen Figur der Zeichnung ist ein vertikaler Schnitt durch einen Kraftstofftank im Bereich des Einfüllstutzens und einer Pumpeneinheit schematisch dargestellt.

Der Kraftstofftank 1 ist ein im Rotationsguß- oder Blasverfahren aus Kunststoff hergestellter Hohlkörper, der eine obere Öffnung 2 und eine seitliche Öffnung 3 aufweist. In die beiden Öffnungen 2 und 3 sind ein Einfüllstutzen 4 und eine Pumpeneinheit 5 auf bekannte Weise eingesetzt und befestigt.

Wesentlicher Bestandteil einer Vorrichtung zum Messen des Füllstandes ist ein sogenannter Foliengeber 7. Bei dem Foliengeber 7 handelt es sich um einen streifenförmigen Träger, auf dessen einer Seite eine sich über die gesamte Länge erstreckende Heizeinrichtung angeordnet ist und auf dessen anderer Seite eine Vielzahl von elektrisch miteinander verbundenen Thermoelementen angeordnet ist. Diese Thermoelemente sind Bestandteil eines elektrischen Kreises, in dem eine Spannung aufgebaut werden kann. Das obere Ende des Foliengebers 7 ist mit einem mehradrigen Anschlußkabel 8 verbunden. Das freie Ende des Anschlußkabels 8 ist mit einem Stecker 9 versehen, der in eine entsprechende Buchse der Pumpeneinheit 5 eingesteckt werden kann. Die Pumpeneinheit 5 ist über (nicht gezeigte) elektrische Leitungen mit einer Spannungsquelle für die dem Foliengeber 7 zugeordnete Heizeinrichtung und mit einem Meßgerät zum Anzeigen der von den auf der Geberfolie angeordneten Thermoelementen erzeugten Spannung verbunden. Der Foliengeber 7 ist in ein Schutzrohr 10 aus einem verformbaren Material eingebettet, das einerseits zum Schutz des Foliengebers 7 vor mechanischen Beschädigungen und andererseits zu einer Versteifung des Foliengebers dient. Das Schutzrohr 10 besteht aus zwei Halbschalen, die unter Bildung eines Schlitzes miteinander verbunden sind. Durch diesen Schlitz kann Kraftstoff in das Schutzrohr 10 eindringen, so dass der Foliengeber 7 vom Kraftstoff umspült ist. Das obere Ende des Schutzrohres 10 und des Foliengebers 7 bzw. des Anschlußkabels 8 sind mit einem Anguß 11 aus Kunststoff miteinander verbunden. Der Anguß 11 ist mit einem Haken 12 versehen, der in einen seitlich am Einfüllstutzen 4 befestigten Bügel 13 eingehängt werden kann. Das untere Ende des Foliengebers 7 und des Schutzrohres 10 sind mit einem Anguß aus Kunststoff verbunden, der mit einem am Boden des Kraftstofftanks 1 angeordneten Eingriffsbereich formschlüssig in Eingriff bringbar ist. Bei dem gezeigten Ausführungsbeispiel ist der Anguß mit einem seitlich angeordneten nach unten ragenden Federarm 15 versehen, und der Boden des Kraftstofftanks 1 ist mit einer nach oben ragenden Rippe 16 versehen.

Da die Wärmeleitfähigkeit des Kraftstoffs wesentlich größer ist als diejenige von Luft, erwärmen sich die vom Kraftstoff umspülten Thermoelemente geringer als die von Luft umgebenen Thermoelemente. Bei einer konstanten Energiezufuhr zu der Heizeinrichtung des Foliengebers kann daher aus der von der Gesamtheit der Thermoelemente erzeugten Spannung auf das Verhältnis der von Kraftstoff bzw. von Luft umgebenen Fläche des Foliengebers 7 geschlossen werden. Wenn die Meßvorrichtung geeicht ist, dann ist die erzeugte Spannung ein Maß für die Füllhöhe des Kraftstoffs in dem Kraftstofftank.

Der Einbau der vorstehend beschriebenen Meßvorrichtung erfolgt folgendermaßen:

Zunächst wird der obere Anguß 11 des Schutzrohres 10 mit seinem Haken 12 in den Bügel 13 des Einfüllstutzens 4 eingehängt. Daraufhin wird das Schutzrohr 10 zusammen mit dem Einfüllstutzen 4 durch die obere Öffnung 2 in den Kraftstofftank 1 eingeführt. Dabei kann der Mechaniker mit einer Hand durch die seitliche Öffnung 3 hindurch das Schutzrohr 10 erfassen und dessen unteren Anguß in die vorgegebene Position am tiefsten Punkt des Tanks führen, so dass der Federarm 15 mit der Rippe 16 kraftschlüssig in Eingriff gelangt, wie dies in der Zeichnung dargestellt ist. Daraufhin kann der Einfüllstutzen 4 auf übliche Weise an dem Kraftstofftank 1 befestigt werden. Das Anschlußkabel 8 des Foliengebers 7 wird daraufhin durch die seitliche Öffnung 3 des Tanks herausgezogen, und sein Stecker 9 wird in die bereitgehaltene Pumpeneinheit 5 eingesteckt. Die Pumpeneinheit 5 wird daraufhin zusammen mit der zugehörigen Pumpenleitung 17 in die seitliche Öffnung 3 des Kraftstofftanks 1 eingesetzt und auf übliche Weise befestigt. Die Pumpeneinheit 5 ist auf der Außenseite mit (nicht gezeigten) Anschlußbuchsen zur elektrischen Verbindung mit einer Stromquelle bzw. mit einem Meßgerät versehen. Die Stromquelle dient zur Versorgung der in den Foliengeber 7 integrierten Heizeinrichtung, und die Meßeinrichtung dient zur Ermittlung der von den in den Foliengeber 7 integrierten Thermoelementen erzeugten Spannung.

Da das Schutzrohr 10 aus einem verformbaren Material besteht, kann es sich auch bei einem zerklüfteten Kraftstofftank vom Einfüllstutzen 4 bis zum tiefsten Punkt des Tanks erstrecken. Dadurch ist gewährleistet, dass der Füllstand nahezu über die gesamte Höhe des Kraftstofftanks ermittelt werden kann. Die Verformbarkeit des Foliengebers 7 bzw. des Schutzrohres 10 ermöglicht eine Befestigung des unteren Endes am tiefsten Punkt des Kraftstofftanks 1 und seines oberen Endes am Einfüllstutzen 4 auch dann, wenn diese horizontal gegeneinander versetzt sind. Der Einbau der Meßvorrichtung kann daher nahezu unbehindert von der jeweiligen Form des Kraftstofftanks vorgenommen werden.

Falls eine Wartung oder ein Austausch der Meßvorrichtung erforderlich sein sollte, dann kann dies auf einfache Weise durchgeführt werden, indem die vorstehend beschriebenen Montageschritte in umgekehrter Reihenfolge ausgeführt werden.

## Patentansprüche

1. Kraftstofftank mit einem in eine erste Öffnung eingebauten Einfüllstutzen (4) und einer in eine zweite Öffnung eingebauten Pumpeneinheit (5) sowie einer Vorrichtung zum Messen des Füllstandes, **dadurch gekennzeichnet, dass** ein Foliengeber (7) mit einem elektrischen Anschlußkabel (8) versehen ist, das durch die Pumpeneinheit (5) hindurch mit einem Anzeigegerät verbindbar ist, dass der Foliengeber (7) in ein Schutzrohr (10) eingebettet ist, das mit Eintrittsöffnungen für den Kraftstoff versehen ist, und dass das Schutzrohr (10) seitlich an dem Einfüllstutzen (4) angebracht und gemeinsam mit diesem in die zugeordnete Öffnung (2) des Kraftstofftanks (1) einsetzbar ist.

2. Kraftstofftank nach Anspruch 1, **dadurch gekennzeichnet, dass** das Anschlußkabel (8) über eine Steckverbindung (9) mit einer oder mehreren in die Pumpeneinheit (5) eingebetteten elektrischen Leitungen verbunden ist.

3. Kraftstofftank nach Anspruch 1 oder 2, **dadurch gekennzeichnet, dass** das obere Ende (11) des Schutzrohres (10) mit dem Einfüllstutzen (4) gelenkig verbunden ist.

4. Kraftstofftank nach Anspruch 3, **dadurch gekennzeichnet, dass** das obere Ende (11) des Schutzrohres (10) mit einem Haken (12) versehen ist, der in einen seitlich am Einfüllstutzen (4) angebrachten Bügel (13) eingehängt ist.

5. Kraftstofftank nach einem der vorhergehenden Ansprüche, **dadurch gekennzeichnet, dass** das untere Ende des Schutzrohres (10) mit Befestigungsmitteln (15) zur Befestigung desselben am Boden (16) des Kraftstofftanks (1) versehen ist.

6. Kraftstofftank nach Anspruch 5, **dadurch gekennzeichnet, dass** am unteren Ende des Schutzrohres (10) eine Federklemme (15) angebracht ist, die mit einem am Boden des Kraftstofftanks (1) angeordneten Eingriffsbereich (16) kraftschlüssig in Eingriff bringbar ist.

7. Kraftstofftank nach einem der vorhergehenden Ansprüche, **dadurch gekennzeichnet, dass** das Schutzrohr (10) aus zwei Halbschalen besteht, die unter Bildung eines Schlitzes miteinander verrastet sind.

## Claims

1. A fuel tank comprising a filler neck (4) installed in a first opening, a pump unit (5) installed in a second opening, and a level-measuring device, **characterised in that** a foil sensor (7) comprises an electric connecting cable (8) which is connected via the pump unit (5) to a display unit, the foil sensor (7) is embedded in a protecting tube (10) formed with inlet openings for the fuel, and the protecting tube (10) is laterally attached to the filler neck (4) and insertable together therewith into the associated opening (2) in the fuel tank (1).

2. A fuel tank according to claim 1, **characterised in that** the connecting cable (8) is connected by a plug and socket connection (9) to one or more electric lines embedded in the pump unit (5).

3. A fuel tank according to claim 1 or claim 2, **characterised in that** the top end (11) of the protecting tube (10) is pivotably connected to the filler neck (4).

4. A fuel tank according to claim 3, **characterised in that** the top end (11) of the protecting tube (10) has a hook (12) suspended from a curved member (13) laterally attached to the filler neck (4).

5. A fuel tank according to any of the preceding claims, **characterised in that** the bottom end of the protecting tube (10) comprises fastening means (15) for fastening it to the bottom (16) of the fuel tank (1).

6. A fuel tank according to claim 5, **characterised in that** a snap-on clip is attached to the bottom end of the protecting tube (10) and is brought into non-positive engagement with an engagement region (16) at the bottom of the tank (1).

7. A fuel tank according to any of the preceding claims, **characterised in that** the protecting tube (10) is made up of two half-shells which lock together to form a slot.

## Revendications

1. Réservoir à carburant comportant un ajutage de remplissage (4) intégré dans une première ouverture et une unité de pompe (5) installée dans une seconde ouverture ainsi qu'un dispositif pour mesurer le niveau de remplissage,
**caractérisé par**
un capteur en forme de film (7) avec un câble de raccordement électrique (8) relié traversant l'unité de pompe (5) à un appareil d'affichage, le capteur en forme de film (7) étant intégré dans un tube de protection (10) muni d'orifices d'entrée pour le carburant et le tube de protection (10) est monté latéralement sur l'ajutage de remplissage (4) et s'installe en commun avec celui-ci dans l'orifice associé (2) du réservoir à carburant (1).

2. Réservoir à carburant selon la revendication 1,
**caractérisé en ce que**
le câble de raccordement (8) est relié par une liaison par connexion (9) à une ou plusieurs lignes électriques intégrées dans l'unité de pompe (5).

3. Réservoir à carburant selon la revendication 1 ou 2,
**caractérisé en ce que**
l'extrémité supérieure (11) du tube protecteur (10) est reliée de manière articulée à l'ajutage de remplissage (4).

4. Réservoir à carburant selon la revendication 3,
**caractérisé en ce que**
l'extrémité supérieure (11) du tube protecteur (10) est munie d'un crochet (12) que l'on accroche dans un arceau (13) prévu latéralement sur l'ajutage de remplissage (4).

5. Réservoir à carburant selon l'une des revendications précédentes,
**caractérisé en ce que**
l'extrémité inférieure du tube protecteur (10) est munie de moyens de fixation (15) pour fixer celui-ci au fond (16) du réservoir à carburant (1).

6. Réservoir à carburant selon la revendication 5,
**caractérisé en ce que**
l'extrémité inférieure du tube protecteur (10) comporte une pince à ressort (15) qui se met en prise par une liaison par la force avec la plage de prise (16) prévue au fond du réservoir à carburant (1).

7. Réservoir à carburant selon l'une des revendications précédentes,
**caractérisé en ce que**
le tube protecteur (10) se compose de deux demi-coquilles accrochées l'une à l'autre en formant une fente.
